(19) Europäisches Patentamt
European Patent Office
Office européen des brevets

(11) **EP 4 322 378 A1**

(12) **EUROPÄISCHE PATENTANMELDUNG**

(43) Veröffentlichungstag:
**14.02.2024 Patentblatt 2024/07**

(21) Anmeldenummer: **22189844.8**

(22) Anmeldetag: **11.08.2022**

(51) Internationale Patentklassifikation (IPC):
*H02K 3/40* (2006.01)     *H02K 11/01* (2016.01)
*H02K 3/34* (2006.01)     *H02K 3/487* (2006.01)

(52) Gemeinsame Patentklassifikation (CPC):
**H02K 11/014; H02K 3/345; H02K 3/40;** H02K 3/487

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Valeo eAutomotive Germany GmbH
91056 Erlangen (DE)**

(72) Erfinder:
• **Böhm, Andreas**
  **91056 c/o VeA, Erlangen (DE)**
• **Rasek, Guido**
  **91056 c/o VeA, Erlangen (DE)**
• **Awate, Shraddha-Bhanudas**
  **97616 c/o VeA, Bad Neustadt (DE)**

(74) Vertreter: **Valeo Powertrain Systems
Service Propriété Intellectuelle
Immeuble le Delta
14, avenue des Béguines
95892 Cergy Pontoise (FR)**

(54) **STATOR FÜR EINE ELEKTRISCHE MASCHINE UND ELEKTRISCHE MASCHINE ZUM ANTREIBEN EINES FAHRZEUGS**

(57)     Stator (1) für eine elektrische Maschine (101), aufweisend:
- eine Statorwicklung (2);
- einen Statorkern (3), der einen Aufnahmeraum (4) für einen Rotor (102) der elektrischen Maschine (101) begrenzt und eine Längsachse (5), eine erste Stirnseite (6) und eine der ersten Stirnseite (6) axial bezüglich der Längsachse (5) gegenüberliegende zweite Stirnseite (7) aufweist; und
- mehrere Nuten (8), die sich jeweils von der ersten Stirnseite (6) zur zweiten Stirnseite (7) durch den Statorkern (3) erstrecken, in denen jeweils ein innenliegender Abschnitt (9) der Statorwicklung (2) aufgenommen ist, und die jeweils einen Zwischenraum (14) aufweisen, der sich entlang der Radialrichtung zwischen dem innerhalb der jeweiligen Nut (8) aufgenommenen innenliegenden Abschnitt (9) und dem Aufnahmeraum (4) über die Ausdehnung der Nut (8) in Axialrichtung und Umfangsrichtung erstreckt;
wobei in einer jeweiligen Nut (8) eine Nutauskleidung (10) angeordnet ist, die den innenliegenden Abschnitt (9) derart umhüllt, dass eine Innenseite (15) der Nutauskleidung (10) dem innenliegenden Abschnitt (9) zugewandt ist, eine Außenseite (16) der Nutauskleidung (10) dem Statorkern (3) zugewandt ist und der innenliegende Abschnitt (9) gegenüber dem Statorkern (3) elektrisch isoliert ist, wobei die Nutauskleidung (10) in dem Zwischenraum (14) eine Faltung (18) aufweist, die sich von der ersten Stirnseite (6) zur zweiten Stirnseite (7) erstreckt und durch welche die Außenseiten (16) eines ersten Abschnitts (19) der Nutauskleidung (10) und eines zweiten Abschnitts (20) der Nutauskleidung (10) einander zugewandt sind; wobei zwischen den Außenseiten (16) des ersten Abschnitts (19) und des zweiten Abschnitts (20) ein Abschirmelement (21) angeordnet ist, das zur Abschirmung von elektrischen Feldern, die von der Statorwicklung (2) ausgehen, im Zwischenraum (14) eingerichtet und elektrisch leitfähig mit dem Statorkern (3) verbunden ist.

**Fig. 2**

**Beschreibung**

Die vorliegende Erfindung betrifft einen Stator für eine elektrische Maschine, aufweisend: eine Statorwicklung; einen Statorkern, der einen Aufnahmeraum für einen Rotor der elektrischen Maschine begrenzt und eine Längsachse, eine erste Stirnseite und eine der ersten Stirnseite axial bezüglich der Längsachse gegenüberliegende zweite Stirnseite aufweist; und mehrere Nuten, die sich jeweils von der ersten Stirnseite zur zweiten Stirnseite durch den Statorkern erstrecken, in denen jeweils ein innenliegender Abschnitt der Statorwicklung aufgenommen ist, und die jeweils einen Zwischenraum aufweisen, der sich entlang der Radialrichtung zwischen dem innerhalb der jeweiligen Nut aufgenommenen innenliegenden Abschnitt und dem Aufnahmeraum über die Ausdehnung der Nut in Axialrichtung und Umfangsrichtung erstreckt; wobei in einer jeweiligen Nut eine Nutauskleidung angeordnet ist, die den innenliegenden Abschnitt derart umhüllt, dass eine Innenseite der Nutauskleidung dem innenliegenden Abschnitt zugewandt ist, eine Außenseite der Nutauskleidung dem Statorkern zugewandt ist und der innenliegende Abschnitt gegenüber dem Statorkern elektrisch isoliert ist, wobei die Nutauskleidung in dem Zwischenraum eine Faltung aufweist, die sich von der ersten Stirnseite zur zweiten Stirnseite erstreckt und durch welche die Außenseiten eines ersten Abschnitts der Nutauskleidung und eines zweiten Abschnitts der Nutauskleidung einander zugewandt sind.

Daneben betrifft die Erfindung eine elektrische Maschine zum Antreiben eines Fahrzeugs.

Die US 2014/0210304 A1 offenbart einen Stator für eine rotierende elektrische Maschine, aufweisend einen ringförmigen Statorkern, in dem eine Vielzahl von Nuten ausgebildet sind, und eine Statorwicklung, die eine Vielzahl von Leitersegmenten aufweist. Die Leitersegmente haben Abschnitte mit einem offenen Ende, die in die Nuten eingesetzt sind, um zwei axiale Seiten des Statorkerns auszubilden. Ein isolierendes blattartiges Teil ist zwischen einer inneren Wandfläche einer jeweiligen Nut und einem jeweiligen Leitersegment angeordnet und in eine zylindrische Form entlang der inneren Wandfläche der Nut gerollt. Ein lockerer Abschnitt des blattartigen Teils ist durch Falten balgartig ausgebildet und einem Luftspalt der elektrischen Maschine zugewandt.

Beim Betrieb elektrischer Maschinen mit einem Stator und einem Rotor können elektrische Entladungen in der elektrischen Maschine auftreten, die beispielsweise Funkenerosion an Lagerkomponenten verursachen oder hochfrequente Störstrahlungen abstrahlen. Diese Störstrahlung kann beispielsweise amplitudenmodulierte Radiosignale beeinträchtigen, was zusätzlich durch die Antennenwirkung einer Abtriebswelle der elektrischen Maschine verstärkt werden kann.

Der Erfindung liegt die Aufgabe zugrunde, eine verbesserte, insbesondere elektromagnetisch störungsärmere, Möglichkeit zum Betreiben einer elektrischen Maschine anzugeben.

Diese Aufgabe wird erfindungsgemäß bei einem Stator der eingangs genannten Art dadurch gelöst, dass zwischen den Außenseiten des ersten Abschnitts und des zweiten Abschnitts ein Abschirmelement angeordnet ist, das zur Abschirmung von elektrischen Feldern, die von der Statorwicklung ausgehen, im Zwischenraum eingerichtet und elektrisch leitfähig mit dem Statorkern verbunden ist.

Der erfindungsgemäße Stator für eine elektrische Maschine weist eine Statorwicklung auf. Der Stator weist ferner einen Statorkern auf. Der Statorkern begrenzt einen Aufnahmeraum für einen Rotor der elektrischen Maschine. Der Statorkern weist eine Längsachse, eine erste Stirnseite und eine zweite Stirnseite auf. Die zweite Stirnseite liegt der ersten Stirnseite axial bezüglich der Längsachse gegenüber. Der Stator weist ferner mehrere Nuten auf. Die Nuten erstrecken sich jeweils von der ersten Stirnseite zur zweiten Stirnseite durch den Statorkern. In den Nuten ist jeweils ein innenliegender Abschnitt der Statorwicklung aufgenommen. Die Nuten weisen jeweils einen Zwischenraum auf. Der Zwischenraum erstreckt sich über die Ausdehnung der in Axialrichtung und Umfangsrichtung entlang der Radialrichtung zwischen dem innerhalb der jeweiligen Nut aufgenommenen innenliegenden Abschnitt und dem Aufnahmeraum. In einer jeweiligen Nut ist eine Nutauskleidung angeordnet. Die Nutauskleidung umhüllt den innenliegenden Abschnitt derart, dass eine Innenseite der Nutauskleidung dem innenliegenden Abschnitt zugewandt ist, eine Außenseite der Nutauskleidung dem Statorkern zugewandt ist und der innenliegende Abschnitt gegenüber dem Statorkern elektrisch isoliert ist. Die Nutauskleidung weist in dem Zwischenraum eine Faltung auf. Die Faltung erstreckt sich von der ersten Stirnseite zur zweiten Stirnseite. Durch die Faltung sind die Außenseiten eines ersten Abschnitts der Nutauskleidung und eines zweiten Abschnitts der Nutauskleidung einander zugewandt. Zwischen den Außenseiten des ersten Abschnitts und des zweiten Abschnitts ist ein Abschirmelement angeordnet. Das Abschirmelement ist zur Abschirmung von elektrischen Feldern, die von der Statorwicklung ausgehen, im Zwischenraum eingerichtet. Das Abschirmelement ist elektrisch leitfähig mit dem Statorkern verbunden.

Die Erfindung beruht auf der Erkenntnis, dass Funkenentladungen insbesondere auf eine zwischen dem Statorkern und dem im Aufnahmeraum anzuordnenden Rotor abfallende Spannung zurückzuführen sind. Diese Spannung ist abhängig von, insbesondere proportional zu, einer zwischen der Statorwicklung und dem Rotor ausgebildeten Kapazität. Durch die Verwendung des Abschirmelements wird diese Kapazität verringert, was wiederum die Spannung zwischen dem Statorkern und dem Rotor verringert. Die Verringerung dieser Spannung reduziert die Gefahr von Funkenentladungen, sodass vorteilhafterweise weniger Funkenerosion an Lagerkomponenten der elektrischen Maschine und weniger amplitudenmodulierte Radiosignale störende Abstrahlungen auftreten. Darüber hinaus kann das Abschirmelement eine Abschirmung magnetischer Streufelder im Zwischenraum erlauben.

Die Statorwicklung ist bevorzugt als Haarnadelwicklung ausgebildet. Dazu kann die Statorwicklung eine Vielzahl Formleitern aufweisen, die an der zweiten Stirnseite elektrisch leitfähig und mechanisch, insbesondere mittels Schweißens, derart miteinander verbunden sind, dass sie zur Erzeugung eines magnetischen Drehfelds im Aufnahmeraum mehrere Strompfade ausbilden. Die Formleiter können jeweils zwei Beinabschnitte und einen an der ersten Stirnseite angeordneten Biegeabschnitt, der die in unterschiedlichen Nuten angeordneten Beinabschnitte miteinander verbindet, aufweisen. Derartige Formleiter werden typischerweise als U-Pins bezeichnet. Alternativ oder zusätzlich können die Formleiter auch an der ersten Stirnseite elektrisch leitfähig und mechanisch, insbesondere mittels Schweißens, miteinander verbunden sein. Derartige Formleiter werden typischerweise als I-Pins bezeichnet. Bevorzugt sind in einer jeweiligen Nut mehrere, vorzugsweise vier, sechs, acht, zehn oder zwölf, Beinabschnitte der Formleiter radial geschichtet angeordnet. Die Beinabschnitte bilden insbesondere die innenliegenden Abschnitte der Statorwicklung aus.

Alternativ kann die Statorwicklung als Runddrahtwicklung ausgebildet sein.

Der Statorkern ist bevorzugt aus einer Vielzahl von axial geschichtet angeordneten und/oder elektrisch gegeneinander isolierten Einzelblechen ausgebildet. Der Statorkern kann insoweit auch als Statorblechpaket bezeichnet werden.

Die Nutauskleidung kann aus einem blattartigen Element, insbesondere aus einem Isolationspapier, ausgebildet sein. Das blattartige Element kann um eine sich entlang des innenliegenden Abschnitts erstreckende Achse gebogen sein, sodass sich zwei parallel zur Achse erstreckende Endabschnitte des blattartigen Elements überlappen. Die Nutauskleidung kann an der ersten Stirnseite und/oder an der zweiten Stirnseite aus dem Statorkern herausragen.

In bevorzugter Ausgestaltung des erfindungsgemäßen Stators ist vorgesehen, dass der Statorkern jede Nut in Umfangsrichtung durch zwei Nutwände begrenzt und das Abschirmelement abschnittsweise zwischen einer der Nutwände und der Außenseite der Nutauskleidung verläuft. Die Nutwände erstrecken sich insbesondere in Radial- und Axialrichtung von der ersten Stirnseite zur zweiten Stirnseite.

Dabei kann das Abschirmelement elektrisch leitfähig mit dem Statorkern verbunden sein, indem es mit einer der Nutwände kontaktiert ist. Alternativ oder zusätzlich kann das Abschirmelement in zum Aufnahmeraum weisender Richtung zwischen der Nutwand und der Außenseite der Nutauskleidung verlaufen.

Allgemein kann beim erfindungsgemäßen Stator vorgesehen sein, dass der Statorkern jede Nut in zum Aufnahmeraum weisende Radialrichtung abschnittsweise durch Statorzähne begrenzt, wobei das Abschirmelement jenseits seines Bereichs, der zwischen den Außenseiten des ersten Abschnitts und des zweiten Abschnitts angeordnet ist, entlang eines der Statorzähne verläuft, wobei das Abschirmelement elektrisch leitfähig mit dem Statorkern verbunden ist, indem es mit dem Statorzahn kontaktiert ist.

Gemäß einer alternativen Ausgestaltung verläuft das Abschirmelement in vom Aufnahmeraum wegweisende Richtung zwischen der Nutwand und der Außenseite der Nutauskleidung.

Bei dem erfindungsgemäßen Stator kann mit Vorteil vorgesehen sein, dass das Abschirmelement eine elektrisch leitfähige erste Leitstruktur, die zwischen den Außenseiten des ersten Abschnitts und des zweiten Abschnitts angeordnet ist, und eine elektrisch leitfähige zweite Leitstruktur, die elektrisch leitfähig mit der ersten Leitstruktur verbunden ist und mit dem Statorkern kontaktiert ist, aufweist. Dabei kann sich die zweite Leitstruktur durchgängig zwischen der ersten Stirnseite und der zweiten Stirnseite erstrecken. Die zweite Leitstruktur kann über ihre gesamte Erstreckung zwischen den Stirnseiten oder nur an einer oder mehreren Stellen mit dem Statorkern kontaktiert sein.

Die erste Leitstruktur kann sich durchgängig zwischen der ersten Stirnseite und der zweiten Stirnseite erstrecken. Dadurch wird eine vollflächige Abschirmung zwischen Statorwicklung und Aufnahmeraum bzw. Rotor ermöglicht.

Alternativ kann vorgesehen sein, dass die erste Leitstruktur mehrere in axialer Richtung elektrisch voneinander isolierte Leitelemente aufweist, die durch die zweite Leitstruktur elektrisch leitfähig miteinander verbunden sind. Eine solche Leitstruktur verringert das Entstehen von Wirbelströmen zwischen den Leitelementen. Dadurch kann eine Erwärmung des Leitelements reduziert werden.

In bevorzugter Ausgestaltung weist das Abschirmelement ein elektrisch isolierendes Substrat auf, auf dem die erste Leitstruktur und/oder die zweite Leitstruktur angeordnet ist oder sind.

Des Weiteren kann vorgesehen sein, dass die erste Leitstruktur durch eine elektrisch leitfähige Folie ausgebildet ist. Alternativ oder zusätzlich kann die zweite Leitstruktur durch eine elektrisch leitfähige Folie ausgebildet sein. Außerdem kann die erste Leitstruktur durch Bedampfen des Substrats ausgebildet sind. Alternativ oder zusätzlich kann die zweite Leitstruktur durch Bedampfen des Substrats ausgebildet sein. Es ist selbstverständlich auch möglich eine durch eine Folie und eine durch Bedampfen ausgebildete Leitstruktur miteinander zu kombinieren.

Gemäß einer besonderen Ausgestaltung der Leitelemente aufweisenden ersten Leitstruktur können die Leitelemente durch jeweils von einer Isolierung umgebene Einzelleiter, insbesondere Einzellitzen, ausgebildet sein und die Isolierungen entlang der Axialrichtung miteinander verbunden sein. Zur Realisierung eines solchen Abschirmelements kann beispielsweise auf ein herkömmliches Flachbandkabel zurückgegriffen werden, sodass unerwünschte Wirbelströme besonders aufwandsarm reduziert werden können.

Um eine mechanisch robuste Ausgestaltung zu erhalten, kann das Abschirmelement auf die Außenseite der Nutauskleidung geklebt sein. Insbesondere kann das Substrat auf die Nutauskleidung geklebt sein oder die erste und/oder zweite Leitstruktur auf die Nutauskleidung geklebt sein.

In bevorzugter Ausgestaltung kann bei dem erfindungsgemäßen Stator vorgesehen sein, dass die Nutauskleidung in dem Zwischenraum eine zweite Faltung aufweist, deren Faltkante sich von der ersten Stirnseite zur zweiten Stirnseite erstreckt und durch welche die Innenseiten des zweiten Abschnitts der Nutauskleidung und eines dritten Abschnitts der Nutauskleidung einander zugewandt sind.

In Weiterbildung kann vorgesehen sein, dass durch die erste Faltung und die zweite Faltung eine vom Aufnahmeraum wegweisende Rückstellkraft auf den in der Nut aufgenommenen innenliegenden Abschnitt ausübbar ist, wenn sich die zweite Faltung auf dem Statorkern abstützt. Dadurch können die innenliegenden Abschnitte vom Aufnahmeraum entfernt positioniert und von einem Bereich der Nut ferngehalten werden, in dem hohe magnetische Streufelder vorliegen. Solche Streufelder verursachen hohe Verschiebungsströme, die Wechselstromverluste in der Statorwicklung erzeugen.

Die der Erfindung zugrundeliegende Aufgabe wird ferner gelöst durch eine elektrische Maschine zum Antreiben eines Fahrzeugs, aufweisend: einen erfindungsgemäßen Stator; den im Aufnahmeraum angeordneten Rotor; eine Welle, die drehfest mit dem Rotor verbunden ist; ein Gehäuse, welches den Stator einhaust; und wenigstens ein am Gehäuse befestigtes Lager, an dem die Welle drehbar bezüglich des Gehäuses und des Stators gelagert ist.

Die elektrische Maschine kann als Asynchronmaschine oder als, insbesondere elektrisch oder permanent erregte, Synchronmaschine ausgebildet sein. Das Fahrzeug kann ein batterieelektrisches Fahrzeug (BEV), Hybridfahrzeug oder Brennstoffzellenfahrzeug sein.

Die zuvor beschriebene Spannung zwischen dem Statorkern und der Rotor liegt insbesondere auch zwischen inneren und äußeren Komponenten des Lages an.

Im Stillstand der elektrischen Maschine kann diese Spannung typischerweise über die Kugeln des Lagers kurzgeschlossen werden. Im rotierenden Betrieb der elektrischen Maschine gleiten die Kugeln jedoch auf einer dünnen Schmierschicht, die die inneren und äußeren Komponenten des Lagers elektrisch isoliert, wodurch die vorgenannte Spannung aufgebaut wird. Übersteigt diese Spannung die Durchschlagspannung des Schmierfilms können die Funkenentladungen auftreten und die Lager schädigen. Gleichsam werden durch diese Entladungen auch hochfrequente Störsignale abgestrahlt, die die amplitudenmodulierten Radiosignale stören können, was insbesondere durch die Antennenwirkung der Welle befördert wird. Durch das Abschirmelement kann die Kapazität und damit auch die Spannung wirksam reduziert werden, sodass es nicht oder seltener zu Funkenentladungen kommt.

Weitere Vorteile und Einzelheiten der vorliegenden Erfindung ergeben sich aus den im folgenden beschriebenen Ausführungsbeispielen und anhand der Zeichnungen. Diese sind schematische Darstellungen und zeigen:

Fig. 1    eine Prinzipskizze eines Ausführungsbeispiels des erfindungsgemäßen Stators;

Fig. 2    eine geschnittene Ansicht einer Nut des Stators gemäß dem ersten Ausführungsbeispiel;

Fig. 3    eine Prinzipskizze des Abschirmelements gemäß dem ersten Ausführungsbeispiel;

Fig. 4    eine geschnittene Ansicht einer Nut des Stators gemäß einem zweiten Ausführungsbeispiel des erfindungsgemäßen Stators;

Fig. 5    eine Prinzipskizze des Abschirmelements gemäß einem dritten Ausführungsbeispiel des erfindungsgemäßen Stators;

Fig. 6    eine Prinzipskizze des Abschirmelements gemäß einem weiteren Ausführungsbeispiel des erfindungsgemäßen Stators;

Fig. 7    eine Prinzipskizze eines Fahrzeugs mit einem Ausführungsbeispiel der erfindungsgemäßen elektrischen Maschine; und

Fig. 8    ein elektrisches Ersatzschaltbild der elektrischen Maschine.

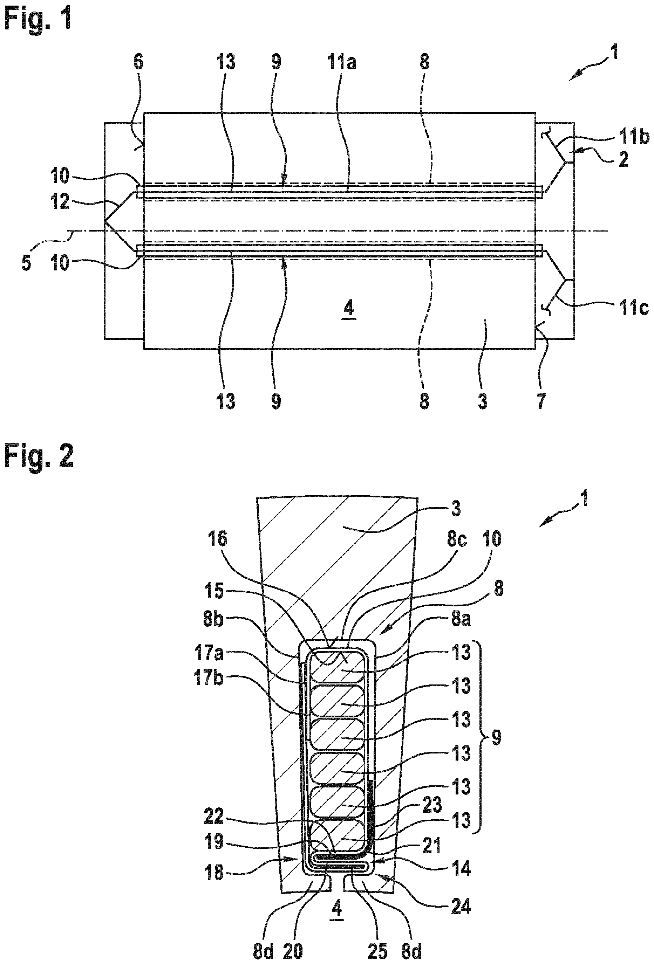

Fig. 1 ist eine Prinzipskizze eines Ausführungsbeispiels eines Stators 1.

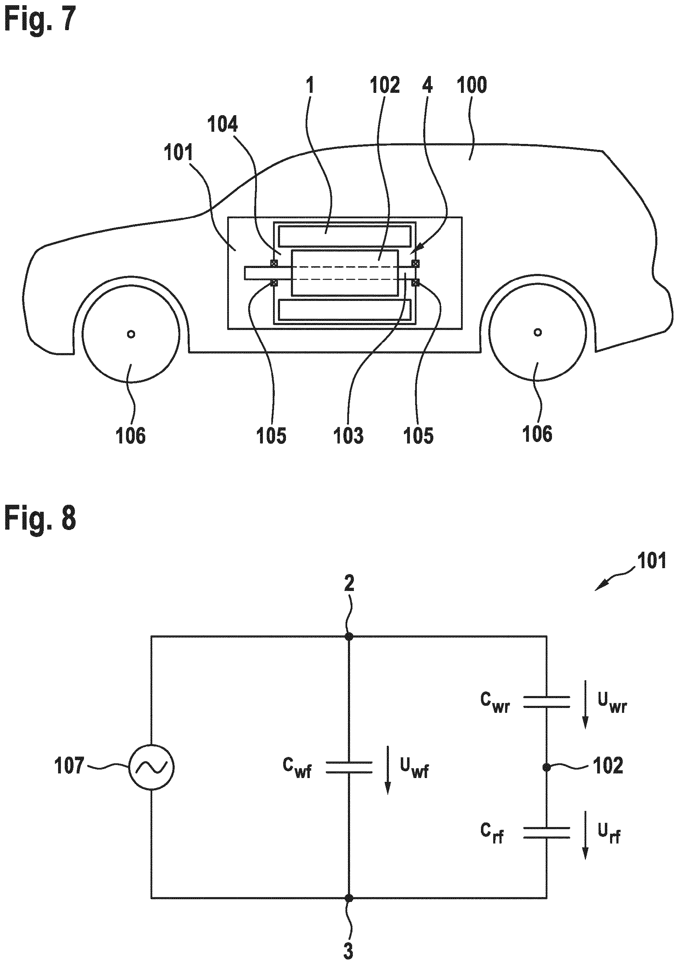

Der Stator 1 weist eine Statorwicklung 2 und einen Statorkern 3, der einen Aufnahmeraum 4 für einen Rotor 102 einer elektrischen Maschine 101 (siehe Fig. 7) begrenzt, auf. Der Statorkern weist eine Längsachse 5, eine erste Stirnseite 6 und eine der ersten Stirnseite 6 axial bezüglich der Längsachse 5 gegenüberliegende zweite Stirnseite 7 auf. Exemplarisch ist der Statorkern 3 aus einer Vielzahl von axial geschichtet angeordneten und gegeneinander isolierten Einzelblechen ausgebildet und kann daher auch als Statorblechpaket aufgefasst werden.

Daneben weist der Stator 1 mehrere Nuten 8 auf, von denen in Fig. 1 lediglich zwei Stück schematisch dargestellt sind. Die Nuten 8 erstrecken sich jeweils von der ersten Stirnseite 6 zur zweiten Stirnseite 7 durch den Statorkern 3. In den Nuten 8 ist jeweils ein innenliegender Abschnitt 9 der Statorwicklung 2 aufgenommen. Ferner ist in einer jeweiligen Nut 8 eine Nutauskleidung 10 des Stators 1 angeordnet, die den innenliegenden Abschnitt 9 umhüllt. Die Nutauskleidung 10 ist beispielsweise durch ein blattartiges Element, insbesondere ein Isolationspapier, ausgebildet und kann an den Stirnseiten 6, 7 kurz aus dem Statorkern 3 herausragen.

In Fig. 1 ist die Statorwicklung 2 exemplarisch als Haarnadelwicklung ausgebildet und rein schematisch durch drei Formleiter 11a, 11b, 11c dargestellt. Die Formleiter 11a-c sind an der zweiten Stirnseite 7 elektrisch leitfähig und mechanisch, insbesondere mittels Schweißens, derart miteinander verbunden sind, dass sie zur Erzeugung eines magnetischen Drehfelds im Aufnahmeraum 4 mehrere Strompfade ausbilden. Die Formleiter 11a-c weisen an der ersten Stirnseite 6 Biegeabschnitte 12, die jeweils in unterschiedlichen Nuten 8 angeordnete Beinabschnitte 13 des Formleiter 11a-c miteinander verbinden, auf. Derartige Formleiter 11a-c werden auch als U-Pins bezeichnet. Es können auch Formleiter vorgesehen sein, die auch an der ersten Stirnseite 6 elektrisch leitfähig und mechanisch miteinander verbunden sein und dann als I-Pins bezeichnet werden können.

Fig. 2 ist eine geschnittene Ansicht einer Nut 8 des Stators 1 gemäß dem ersten Ausführungsbeispiel, wobei die in Fig. 2 gezeigte Nut 8 repräsentativ für die übrigen Nuten 8 des Stator 1 ist.

Die Nut 8 ist in Umfangsrichtung durch zwei Nutwände 8a, 8b und in Radialrichtung durch einen Nutgrund 8c begrenzt. Daneben begrenzt der Statorkern 3 jede Nut in zum Aufnahmeraum 4 weisende Radialrichtung abschnittsweise durch Statorzahnköpfe 8d. Fig. 2 zeigt ferner exemplarisch, dass sechs Beinabschnitt 13 bzw. Formleiter 11a-c radial geschichtet in der Nut 8 angeordnet sind und dort den innenliegenden Abschnitt 9 ausbilden.

Die Nut 8 weist einen Zwischenraum 14 auf, der sich entlang der Radialrichtung zwischen dem innerhalb der Nut 8 aufgenommenen innenliegenden Abschnitt 9 und dem Aufnahmeraum 4 über die Ausdehnung der Nut 8 in Axialrichtung und Umfangsrichtung erstreckt. Die Nutauskleidung 10 umhüllt den innenliegenden Abschnitt 9 ersichtlich derart, dass eine Innenseite 15 der Nutauskleidung 10 dem innenliegenden Abschnitt 9 zugewandt ist, eine Außenseite 16 der Nutauskleidung 10 dem Statorkern 3 zugewandt ist und der innenliegende Abschnitt 9 gegenüber dem Statorkern 3 elektrisch isoliert ist. Bei der Ausbildung der Nutauskleidung 10 durch das blattartige Element überlappen sich dabei dessen Endabschnitte 17a, 17b.

Die Nutauskleidung 10 weist in dem Zwischenraum 14 eine erste Faltung 18 auf, die sich von der ersten Stirnseite 6 zur zweiten Stirnseite 7 erstreckt. Durch die erste Faltung 18 sind die Außenseiten 16 eines ersten Abschnitts 19 der Nutauskleidung 10 und eines zweiten Abschnitts 20 der Nutauskleidung 10 einander zugewandt.

Zwischen den Außenseiten 16 des ersten Abschnitts 19 und des zweiten Abschnitts 20 ist ein Abschirmelement 21 angeordnet. Das Abschirmelement 21 ist zur Abschirmung von elektrischen Feldern, die von der Statorwicklung 2 ausgehen, im Zwischenraum 14 eingerichtet und elektrisch leitfähig mit dem Statorkern 3 verbunden.

Dazu ist gemäß dem ersten Ausführungsbeispiel vorgesehen, dass das Abschirmelement 21 abschnittsweise in vom Aufnahmeraum 4 wegweisende Richtung, d.h. in zum Nutgrund 8c weisende Richtung, zwischen der Nutwand 8a und der Außenseite 16 der Nutauskleidung 10 verläuft und mit der Nutwand 8a kontaktiert ist. Dabei weist das Abschirmelement 21 eine elektrisch leitfähige erste Leitstruktur 22 auf, die zwischen den Außenseiten des ersten Abschnitts 19 und des zweiten Abschnitts 20 angeordnet ist, und eine elektrisch leitfähige zweite Leitstruktur 23, die elektrisch leitfähig mit der ersten Leitstruktur 22 verbunden und mit dem Statorkern 3 kontaktiert ist, auf.

Außerdem weist die Nutauskleidung in dem Zwischenraum eine zweite Faltung 24 auf, deren Faltkante sich von der ersten Stirnseite 6 zur zweiten Stirnseite 7 erstreckt, und durch welche die Innenseiten 15 des zweiten Abschnitts 20 und eines dritten Abschnitts 25 einander zugewandt sind. Durch die erste Faltung 18 und die zweite Faltung 24 ist eine vom Aufnahmeraum 4 wegweisende bzw. zum Nutgrund 8c weisende Rückstellkraft auf den in der Nut 8 aufgenommenen innenliegenden Abschnitt 9 ausübbar, wenn sich die zweite Faltung auf dem Statorkern 3 abstützt. Dadurch wird der innenliegende Abschnitt 9 weiter von magnetischen Streufeldern, die erhöhte Wechselstromverluste in der Statorwicklung 2 verursachen, entfernt.

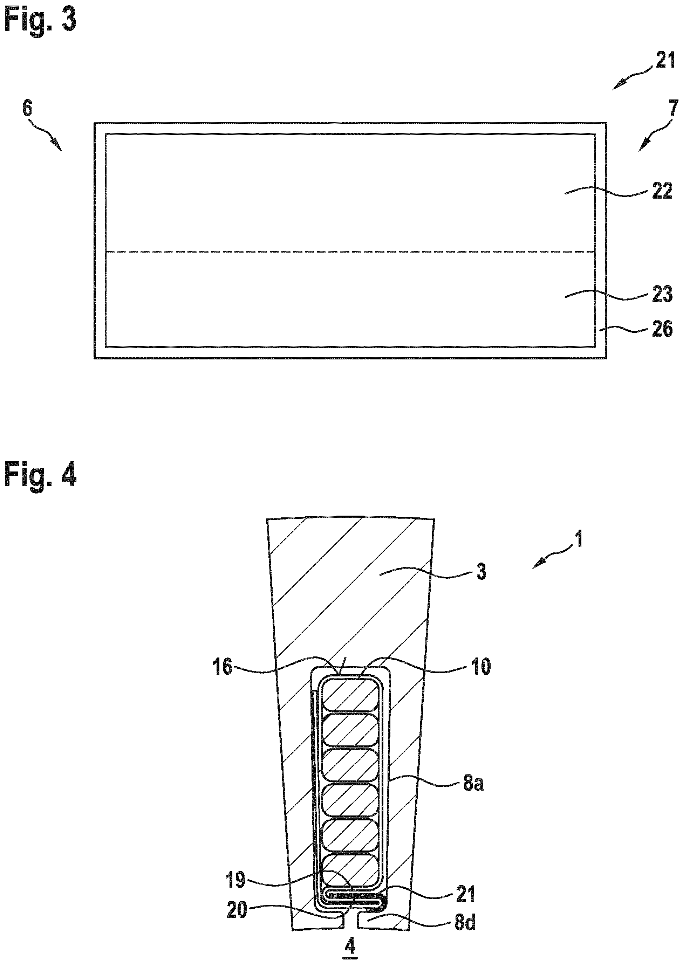

Fig. 3 ist eine Prinzipskizze des Abschirmelements 21 gemäß dem ersten Ausführungsbeispiel.

Im vorliegenden Ausführungsbeispiel sind sowohl die erste Leitstruktur 22 als auch die zweite Leitstruktur 23 durchgängig zwischen der ersten Stirnseite 6 und der zweiten Stirnseite 7, insbesondere einstückig, ausgebildet. Das Abschirmelement 21 weist dabei ferner ein elektrisch isolierendes Substrat 26 auf, auf dem die erste Leitstruktur 22 und die zweite Leitstruktur 23 angeordnet sind. Die Leitstrukturen 22, 23 können beispielsweise durch Bedampfen des Substrats 26 oder als laminierte Folie ausgebildet sein. Das Substrat 26 ist dabei durch Verkleben auf der Außenseite 16 an der Nutauskleidung 10 befestigt (vgl. Fig. 2).

Fig. 4 ist eine geschnittene Ansicht der Nut 8 des Stators 1 gemäß einem zweiten Ausführungsbeispiel. Das zweite Ausführungsbeispiel entspricht dabei bis auf die im Folgenden beschriebenen Abweichungen dem ersten Ausführungsbeispiel, wobei gleiche oder gleichwirkende Komponenten mit identischen Bezugszeichen versehen sind.

Bei dem zweiten Ausführungsbeispiel verläuft das Abschirmelement 21 in zum Aufnahmeraum 4 weisender Richtung zwischen der Nutwand 8a und der Außenseite 16 der Nutauskleidung 10. Das Abschirmelement 21 verläuft ferner jenseits seines Bereichs, der zwischen den Außenseiten 16 des ersten Abschnitts 19 und des zweiten Abschnitts 20 angeordnet ist, entlang eines der Statorzahnköpfe 8d verläuft. Das Abschirmelement 21 ist durch Kontaktierung mit dem Statorzahnkopf 8d elektrisch leitfähig mit dem Statorkern 3 verbunden.

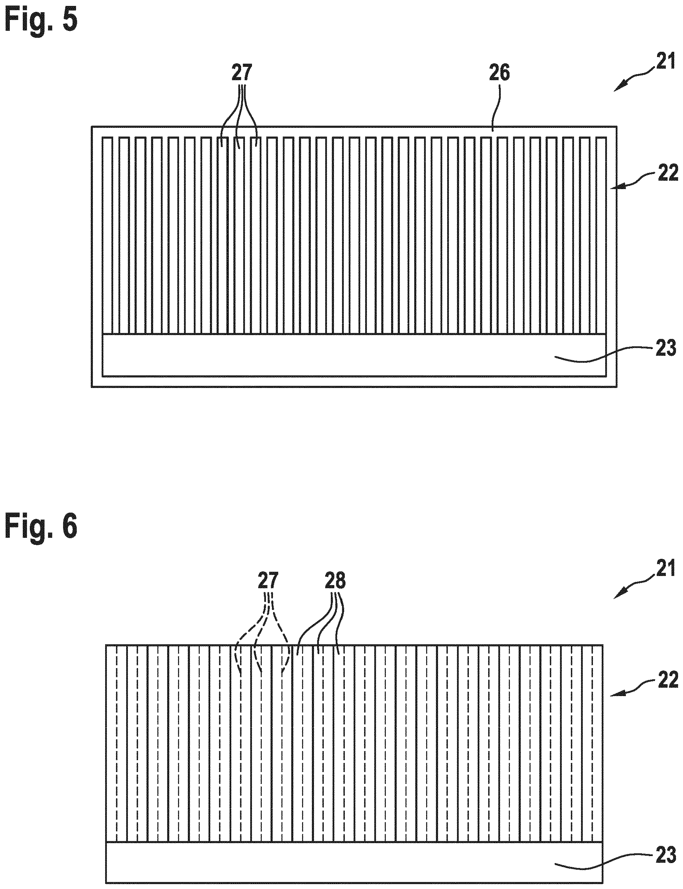

Fig. 5 ist eine Prinzipskizze des Abschirmelements 21 gemäß einem dritten Ausführungsbeispiel des Stators 1. Das dritte Ausführungsbeispiel entspricht dabei bis auf die im Folgenden beschriebenen Abweichungen dem ersten oder zweiten Ausführungsbeispiel, wobei gleiche oder gleichwirkende Komponenten mit identischen Bezugszeichen versehen sind.

Gemäß dem dritten Ausführungsbeispiel weist die erste Leitstruktur 22 mehrere in axialer Richtung elektrisch voneinander isolierte Leitelemente 27 auf, die durch die zweite Leitstruktur 23 elektrisch leitfähig miteinander verbunden sind. Dabei erstreckt sich die zweite Leitstruktur 23 wie beim ersten Ausführungsbeispiel durchgängig zwischen den Stirnseiten 6, 7.

Gemäß einem weiteren Ausführungsbeispiel, das einem der zuvor beschriebenen Ausführungsbeispiele entspricht, wird auf das Substrat 26 verzichtet und die Leitstrukturen 22, 23 werden direkt durch Verkleben auf der Außenseite 16 an der Nutauskleidung 10 befestigt.

Fig. 6 ist eine Prinzipskizze des Abschirmelements 21 gemäß einem weiteren Ausführungsbeispiel des Stators 1, das bis auf die im Folgenden beschriebenen Abweichungen dem dritten Ausführungsbeispiel entspricht, wobei gleiche oder gleichwirkende Komponenten mit identischen Bezugszeichen versehen sind.

Gemäß dem vierten Ausführungsbeispiel sind die Leitelemente 27 durch jeweils von einer Isolierung 28 umgebene Einzelleiter, insbesondere Einzellitzen, ausgebildet. Die Isolierungen 28 sind entlang der Axialrichtung miteinander verbunden. Das Abschirmelement 21 kann z.B. durch ein Flachbandkabel ausgebildet sind, bei dem sich die Einzelleiter entlang der Umfangsrichtung erstrecken. Die zweite Leitstruktur 23 kann beispielsweise durch linienförmiges Verlöten der abisolierten Einzelleiter oder durch Anlöten eines Streifens aus einem elektrisch leitfähigen Material ausgebildet sein. Auf ein Substrat 26 kann dabei regelmäßig verzichtet werden.

Gemäß einem weiteren Ausführungsbeispiel des Stators 1 ist die Statorwicklung statt als Haarnadelwicklung als Runddrahtwicklung ausgebildet.

Fig. 7 ist eine Prinzipskizze eines Fahrzeugs 100 mit einem Ausführungsbeispiel einer elektrischen Maschine 101.

Die elektrische Maschine 101, beispielsweise ein permanent oder elektrisch erregter Synchronmotor oder ein Asynchronmotor, weist einen Stator 1 gemäß einem der zuvor beschriebenen Ausführungsbeispiele sowie einen Rotor 102 auf. Der Rotor 102 ist drehbar bezüglich des Stators 1 im Aufnahmeraum 4 gelagert.

Die elektrische Maschine 101 weist ferner eine Welle 103, die drehfest mit dem Rotor 102 verbunden ist, ein Gehäuse 104, welches den Stator 1 einhaust, und zwei am Gehäuse 104 befestigtes Lager 105, an dem die Welle 103 drehbar bezüglich des Gehäuses 104 und des Stators 1 gelagert ist.

Das Fahrzeug 100 weist ferner Räder 106 auf. Die elektrische Maschine 101 ist dazu eingerichtet ist, wenigstens eines der Räder 106 indirekt, beispielsweise über ein Getriebe (nicht gezeigt) anzutreiben oder direkt, beispielsweise in Gestalt eines Radnabenmotors, anzutreiben. Das Fahrzeug 100 kann ferner eine mit dem Rad 106 gekoppelte Achse (nicht gezeigt) aufweisen, die die elektrische Maschine 101 des Fahrzeugs 101 direkt oder indirekt antreibt.

Das Fahrzeug 100 ist ein batterieelektrisches Fahrzeug (BEV), ein mittels einer Brennstoffzelle betriebenes Fahrzeug oder ein Hybridfahrzeug. Im letzteren Fall weist das Fahrzeug 100 ferner einen Verbrennungsmotor (nicht gezeigt) auf.

Fig. 8 ist ein elektrisches Ersatzschaltbild der elektrischen Maschine 101.

Im Ersatzschaltbild sind eine Kapazität $C_{wf}$ zwischen der Statorwicklung 2 und dem Statorkern 3, eine Kapazität $C_{wr}$ zwischen der Statorwicklung 2 und dem Rotor 102 sowie eine Kapazität $C_{rf}$ zwischen dem Rotor 102 und dem Statorkern 3 zusammen mit einer äquivalenten Wechselstromquelle 107 modelliert. Über den Kapazitäten fallen entsprechende Spannungen $U_{wf}$, $U_{wr}$, Urf ab.

Aus den Spannungs- und Kapazitätsverhältnissen

$$\frac{U_{rf}}{U_{wr}} = \frac{C_{wr}}{C_{rf}}$$

ergibt sich für die zwischen dem Statorkern 3 und dem Rotor 102 abfallende Spannung

$$U_{rf} = \frac{C_{wr}}{C_{rf}} U_{wr}$$

Folglich kann diese Spannung, die für Funkendurchschläge in den Lagern 105 und unerwünschte, amplitudenmodulierte Radiosignale störende Abstrahlungen durch die Welle 103 maßgeblich ist, durch Reduktion der Kapazität $C_{wr}$ reduziert werden. Diese Kapazitätsreduktion wird durch die Verwendung des Abschirmelements 21 realisiert.

**Patentansprüche**

1. Stator (1) für eine elektrische Maschine (101), aufweisend:

- eine Statorwicklung (2);
- einen Statorkern (3), der einen Aufnahmeraum (4) für einen Rotor (102) der elektrischen Maschine (101) begrenzt und eine Längsachse (5), eine erste Stirnseite (6) und eine der ersten Stirnseite (6) axial bezüglich der Längsachse (5) gegenüberliegende zweite Stirnseite (7) aufweist; und
- mehrere Nuten (8), die sich jeweils von der ersten Stirnseite (6) zur zweiten Stirnseite (7) durch den Statorkern (3) erstrecken, in denen jeweils ein innenliegender Abschnitt (9) der Statorwicklung (2) aufgenommen ist, und die jeweils einen Zwischenraum (14) aufweisen, der sich entlang der Radialrichtung zwischen dem innerhalb der jeweiligen Nut (8) aufgenommenen innenliegenden Abschnitt (9) und dem Aufnahmeraum (4) über die Ausdehnung der Nut (8) in Axialrichtung und Umfangsrichtung erstreckt;

wobei in einer jeweiligen Nut (8) eine Nutauskleidung (10) angeordnet ist, die den innenliegenden Abschnitt (9) derart umhüllt, dass eine Innenseite (15) der Nutauskleidung (10) dem innenliegenden Abschnitt (9) zugewandt ist, eine Außenseite (16) der Nutauskleidung (10) dem Statorkern (3) zugewandt ist und der innenliegende Abschnitt (9) gegenüber dem Statorkern (3) elektrisch isoliert ist, wobei die Nutauskleidung (10) in dem Zwischenraum (14) eine Faltung (18) aufweist, die sich von der ersten Stirnseite (6) zur zweiten Stirnseite (7) erstreckt und durch welche die Außenseiten (16) eines ersten Abschnitts (19) der Nutauskleidung (10) und eines zweiten Abschnitts (20) der Nutauskleidung (10) einander zugewandt sind, **dadurch gekennzeichnet, dass** zwischen den Außenseiten (16) des ersten Abschnitts (19) und des zweiten Abschnitts (20) ein Abschirmelement (21) angeordnet ist, das zur Abschirmung von elektrischen Feldern, die von der Statorwicklung (2) ausgehen, im Zwischenraum (14) eingerichtet und elektrisch leitfähig mit dem Statorkern (3) verbunden ist.

2. Stator nach Anspruch 1, wobei der Statorkern (2) jede Nut (8) in Umfangsrichtung durch zwei Nutwände (8a, 8b) begrenzt und das Abschirmelement abschnittsweise zwischen einer der Nutwände (8a) und der Außenseite (16) der Nutauskleidung (10) verläuft.

3. Stator nach Anspruch 2, wobei das Abschirmelement (21) elektrisch leitfähig mit dem Statorkern (3) verbunden ist, indem es mit einer der Nutwände (8a) kontaktiert ist.

4. Stator nach Anspruch 2 oder 3, wobei das Abschirmelement (21) in zum Aufnahmeraum (4) weisender Richtung zwischen der Nutwand (8a) und der Außenseite (16) der Nutauskleidung (10) verläuft.

5. Stator nach einem der vorhergehenden Ansprüche, wobei der Statorkern (3) jede Nut (8) in zum Aufnahmeraum (4) weisende Radialrichtung abschnittsweise durch Statorzahnköpfe (8d) begrenzt, wobei das Abschirmelement (21) jenseits seines Bereichs, der zwischen den Außenseiten (16) des ersten Abschnitts (19) und des zweiten Abschnitts (20) angeordnet ist, entlang eines der Statorzahnköpfe (8d) verläuft, wobei das Abschirmelement (21) elektrisch leitfähig mit dem Statorkern (3) verbunden ist, indem es mit dem Statorzahnkopf (8d) kontaktiert ist.

6. Stator nach Anspruch 2 oder 3, wobei das Abschirmelement (21) in vom Aufnahmeraum (4) wegweisende Richtung zwischen der Nutwand (8a) und der Außenseite (16) der Nutauskleidung (10) verläuft.

7. Stator nach einem der vorhergehenden Ansprüche, wobei das Abschirmelement (21)

- eine elektrisch leitfähige erste Leitstruktur (22), die zwischen den Außenseiten (16) des ersten Abschnitts (19) und des zweiten Abschnitts (20) angeordnet ist, und
- eine elektrisch leitfähige zweite Leitstruktur (23), die elektrisch leitfähig mit der ersten Leitstruktur (22) verbunden ist und mit dem Statorkern (3) kontaktiert ist,

aufweist.

8. Stator nach Anspruch 7, wobei sich die erste Leitstruktur (22) durchgängig zwischen der ersten Stirnseite (6) und der zweiten Stirnseite (7) erstreckt.

9. Stator nach Anspruch 7, wobei die erste Leitstruktur (22) mehrere in axialer Richtung elektrisch voneinander isolierte Leitelemente (27) aufweist, die durch die zweite Leitstruktur (23) elektrisch leitfähig miteinander verbunden sind.

10. Stator nach einem der Ansprüche 7 bis 9, wobei das Abschirmelement ein elektrisch isolierendes Substrat (26) aufweist, auf dem die erste Leitstruktur (22) und/oder die zweite Leitstruktur (23) angeordnet ist oder sind.

11. Stator nach einem der Ansprüche 7 bis 10, wobei die erste Leitstruktur (22) und/oder die zweite Leitstruktur (23) durch eine elektrisch leitfähige Folie ausgebildet ist oder sind.

12. Stator nach Anspruch 9, wobei
die Leitelemente (27) durch jeweils von einer Isolierung (28) umgebene Einzelleiter, insbesondere Einzellitzen, ausgebildet sind und die Isolierungen (28) entlang der Axialrichtung miteinander verbunden sind.

13. Stator nach einem der vorhergehenden Ansprüche, wobei
das Abschirmelement (21) auf die Außenseite (16) der Nutauskleidung (10) geklebt ist.

14. Stator nach einem der vorhergehenden Ansprüche, wobei
die Nutauskleidung (10) in dem Zwischenraum (14) eine zweite Faltung (24) aufweist, deren Faltkante sich von der ersten Stirnseite (6) zur zweiten Stirnseite (7) erstreckt und durch welche die Innenseiten (15) des zweiten Abschnitts (20) der Nutauskleidung (10) und eines dritten Abschnitts (25) der Nutauskleidung (10) einander zugewandt sind, wobei durch die erste Faltung (18) und die zweite Faltung (24) eine vom Aufnahmeraum (4) wegweisende Rückstellkraft auf den in der Nut (8) aufgenommenen innenliegenden Abschnitt (9) ausübbar ist, wenn sich die zweite Faltung (24) auf dem Statorkern (3) abstützt.

15. Elektrische Maschine (101) zum Antreiben eines Fahrzeugs (100), aufweisend:

    - einen Stator (1) nach einem der vorhergehenden Ansprüche;
    - den im Aufnahmeraum (4) angeordneten Rotor (102);
    - eine Welle (103), die drehfest mit dem Rotor (102) verbunden ist;
    - ein Gehäuse (104), welches den Stator (1) einhaust; und
    - wenigstens ein am Gehäuse (104) befestigtes Lager (105), an dem die Welle (103) drehbar bezüglich des Gehäuses (104) und des Stators (1) gelagert ist.

# Fig. 1

# Fig. 2

**Fig. 3**

**Fig. 4**

**Fig. 5**

**Fig. 6**

## Fig. 7

## Fig. 8

**Europäisches Patentamt**
**European Patent Office**
**Office européen des brevets**

# EUROPÄISCHER RECHERCHENBERICHT

**Nummer der Anmeldung**

**EP 22 18 9844**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | US 2020/227968 A1 (YOSHITAKE YUUICHIROU [JP] ET AL) 16. Juli 2020 (2020-07-16)<br>* Absatz [0014] *<br>* Absatz [0032] – Absatz [0036] *<br>* Absatz [0063] – Absatz [0064] *<br>* Abbildungen 1-6 *<br>----- | 1-4,6-8, 13,15<br>5,10,11, 14 | INV.<br>H02K3/40<br>H02K11/01<br>H02K3/34<br><br>ADD.<br>H02K3/487 |
| Y | DE 10 2017 218451 A1 (BOSCH GMBH ROBERT [DE]) 18. April 2019 (2019-04-18)<br>* Absatz [0036] *<br>* Abbildungen 1-12 *<br>----- | 5,10,11 | |
| Y,D | US 2014/210304 A1 (TAMURA AKITO [JP]) 31. Juli 2014 (2014-07-31)<br>* Abbildung 11 *<br>----- | 14 | |
| A | KR 2021 0155508 A (HYUNDAI MOTOR CO LTD [KR]; KIA CORP [KR]) 23. Dezember 2021 (2021-12-23)<br>* Abbildungen 10-12 *<br>----- | 1-15 | |

**RECHERCHIERTE SACHGEBIETE (IPC)**

H02K

Der vorliegende Recherchenbericht wurde für alle Patentansprüche erstellt

| Recherchenort | Abschlußdatum der Recherche | Prüfer |
|---|---|---|
| Den Haag | 18. Januar 2023 | Arpaci, Mutlu |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 18 9844

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-01-2023

| Im Recherchenbericht angeführtes Patentdokument | Datum der Veröffentlichung | Mitglied(er) der Patentfamilie | | Datum der Veröffentlichung |
|---|---|---|---|---|
| US 2020227968 A1 | 16-07-2020 | JP | 6944332 B2 | 06-10-2021 |
| | | JP | 2019075873 A | 16-05-2019 |
| | | US | 2020227968 A1 | 16-07-2020 |
| | | WO | 2019073651 A1 | 18-04-2019 |
| DE 102017218451 A1 | 18-04-2019 | CN | 111194515 A | 22-05-2020 |
| | | DE | 102017218451 A1 | 18-04-2019 |
| | | WO | 2019076543 A1 | 25-04-2019 |
| US 2014210304 A1 | 31-07-2014 | JP | 6156679 B2 | 05-07-2017 |
| | | JP | 2014143885 A | 07-08-2014 |
| | | US | 2014210304 A1 | 31-07-2014 |
| KR 20210155508 A | 23-12-2021 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140210304 A1